(19) Europäisches Patentamt / European Patent Office / Office européen des brevets

(11) **EP 4 663 717 A1**

(12) **EUROPEAN PATENT APPLICATION**
published in accordance with Art. 153(4) EPC

(43) Date of publication:
**17.12.2025  Bulletin 2025/51**

(21) Application number: **24753347.4**

(22) Date of filing: **06.02.2024**

(51) International Patent Classification (IPC):
**C09K 5/04** $^{(2006.01)}$

(52) Cooperative Patent Classification (CPC):
**C09K 5/04; F25B 1/00**

(86) International application number:
**PCT/JP2024/003884**

(87) International publication number:
**WO 2024/166904 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023  JP 2023016344**

(71) Applicant: **Daikin Industries, Ltd.**
**Osaka-shi, Osaka 530-0001 (JP)**

(72) Inventors:
• **ITANO, Mitsushi**
**Osaka-Shi, Osaka 530-0001 (JP)**
• **GOTO, Tomoyuki**
**Osaka-Shi, Osaka 530-0001 (JP)**
• **YOSHIMURA, Takashi**
**Osaka-Shi, Osaka 530-0001 (JP)**
• **USUI, Takashi**
**Osaka-Shi, Osaka 530-0001 (JP)**
• **NAKAUE, Tsubasa**
**Osaka-Shi, Osaka 530-0001 (JP)**
• **TOKUNO, Satoshi**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **REFRIGERANT-CONTAINING COMPOSITION, USE OF SAME, FREEZER HAVING SAME, AND METHOD FOR OPERATING FREEZER**

(57)    An object of the present disclosure is to provide a novel low-GWP mixed refrigerant. The present disclosure provides a composition containing a refrigerant that contains trans-1,2-difluoroethylene (HFO-1132(E)), 1,1-difluoroethane (R152a), and X in a total amount of 99.5 mass% or more based on the entire refrigerant, wherein X represents 2,3,3,3-tetrafluoropropene (HFO-1234yf) and/or trans-1,3,3,3-tetrafluoropropene (HFO-1234ze(E)),
wherein in a ternary composition diagram in which the percentages by mass of HFO-1132(E), R152a, and X (HFO-1234yf and/or HFO-1234ze(E)) based on their sum in the refrigerant are respectively x, y, and z,
the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and
the sum of HFO-1132(E), R152a, and X is 100 mass%,
when $0 \leq r < 0.45125$, coordinates (x,y,z) fall within a figure surrounded by
point A (80.2, 19.8, 0.0),
point $B_r$ ($-10.832r^2+33.032r+44.3$, 0.0, $10.832r^2-33.032r+55.7$),
point $H_r$ (20.0, 0.0, 80.0),
point $E'_r$ (20.0, $-62.715r+28.3$, $62.715r+51.7$), and
point E (28.3, 71.7, 0.0),

or fall on any of line segments $AB_r$, $H_rE'_r$, or $E'_rE$ but do not fall on point A, point $B_r$, point $H_r$, or point E, and
line segment $AB_r$, line segment $B_rH_r$, line segment $H_rE'_r$, line segment $E'_rE$, and line segment EA are straight lines;
and when $0.45125 \leq r \leq 1.0$, coordinates (x,y,z) fall within a figure surrounded by
point A (80.2, 19.8, 0.0),
point $B_r$ ($-10.832r^2+33.032r+44.3$, 0.0, $10.832r^2-33.032r+55.7$),
point $F_r$ ($5.892r^2+9.308r+14.6$, 0.0, $-5.892r^2-9.308r+85.4$), and
point E (28.3, 71.7, 0.0),

or fall on line segment $AB_r$ or $F_rE$ but do not fall on point A, point $B_r$, point $F_r$, or point E, and

line segment $AB_r$, line segment $B_rF_r$, line segment $F_rE$, and line segment EA are straight lines.

Fig. 1

**Description**

Technical Field

The present disclosure relates to a composition comprising a refrigerant, use of the composition, a refrigerating machine having the composition, and a method for operating the refrigerating machine.

Background Art

A working medium for thermal cycling that contains trifluoroethylene (HFO-1123) and 1,2-difluoroethylene (HFO-1132) has been proposed as a replacement for R410A in thermal cycling (PTL 1).

Citation List

Patent Literature

PTL 1: WO2015/141678

Summary of Invention

Technical Problem

An object of the present disclosure is to provide a novel low-GWP mixed refrigerant.

Solution to Problem

Item 1.

A composition comprising a refrigerant,

the refrigerant comprising trans-1,2-difluoroethylene (HFO-1132(E)), 1,1-difluoroethane (R152a), and X in a total amount of 99.5 mass% or more based on the entire refrigerant, wherein X represents 2,3,3,3-tetrafluoropropene (HFO-1234yf) and/or trans-1,3,3,3-tetrafluoropropene (HFO-1234ze(E)), wherein in a ternary composition diagram in which
the percentages by mass of HFO-1132(E), R152a, and X (HFO-1234yf and/or HFO-1234ze(E)) based on their sum in the refrigerant are respectively x, y, and z,
the ratio of the concentration of HFO-1234ze(E) to the concentration of (HFO-1234yf and HFO-1234ze(E)) is expressed by $r = HFO\text{-}1234ze(E)/(HFO\text{-}1234yf + HFO\text{-}1234ze(E))$, and
the sum of HFO-1132(E), R152a, and X is 100 mass%,

when $0 \leq r < 0.45125$, coordinates (x,y,z) fall within a figure surrounded by

point A (80.2, 19.8, 0.0),
point $B_r$ ($-10.832r^2+33.032r+44.3$, 0.0, $10.832r^2-33.032r+55.7$),
point $H_r$ (20.0, 0.0, 80.0),
point $E'_r$ (20.0, $-62.715r+28.3$, $62.715r+51.7$), and
point E (28.3, 71.7, 0.0),

or fall on any of line segments $AB_r$, $H_rE'_r$, or $E'_rE$ but do not fall on point A, point $B_r$, point $H_r$, or point E, and

line segment $AB_r$, line segment $B_rH_r$, line segment $H_rE'_r$, line segment $E'_rE$, and line segment EA are straight lines, and when $0.45125 \leq r \leq 1.0$, coordinates (x,y,z) fall within a figure surrounded by

point A (80.2, 19.8, 0.0),
point $B_r$ ($-10.832r^2+33.032r+44.3$, 0.0, $10.832r^2-33.032r+55.7$),
point $F_r$ ($5.892r^2+9.308r+14.6$, 0.0, $-5.892r^2-9.308r+85.4$), and
point E (28.3, 71.7, 0.0),

or fall on line segment $AB_r$ or $F_rE$ but do not fall on point A, point $B_r$, point $F_r$, or point E, and
line segment $AB_r$, line segment $B_rF_r$, line segment $F_rE$, and line segment EA are straight lines.

Item 2.

The composition according to Item 1,
wherein

in a ternary composition diagram in which
the percentages by mass of HFO-1132(E), R152a, and X (HFO-1234yf and/or HFO-1234ze(E)) based on their sum in the refrigerant are respectively x, y, and z,
the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and
the sum of HFO-1132(E), R152a, and X is 100 mass%,

when $0 \leq r < 0.45125$, coordinates (x,y,z) fall within a figure surrounded by

point C (57.0, 43.0, 0.0),
point $D_r$ (44.0, 0.0, 56.0),
point $H_r$ (20.0, 0.0, 80.0),
point $E'_r$ (20.0, -62.715r+28.3, 62.715r+51.7), and
point E (28.3, 71.7, 0.0),

or fall on any of line segment $CD_r$, $H_rE'_r$, or $E'_rE$ but do not fall on point C, point $D_r$, point $H_r$, or point E, and

line segment $CD_r$, line segment $D_rH_r$, line segment $H_rE'_r$, line segment $E'_rE$, and line segment EA are straight lines, and
when $0.45125 \leq r \leq 1.0$, coordinates (x,y,z) fall within a figure surrounded by

point C (57.0, 43.0, 0.0),
point $D_r$ (44.0, 0.0, 56.0),
point $F_r$ ($5.892r^2$+9.308r+14.6, 0.0, $-5.892r^2$-9.308r+85.4), and point E (28.3, 71.7, 0.0),

or fall on any of line segment $CD_r$, $D_rF_r$, or $F_rE$ but do not fall on point C, point $D_r$, point $F_r$, or point E, and
line segment $CD_r$, line segment $D_rF_r$, line segment $F_rE$, and line segment EC are straight lines.

Item 3.

The composition according to Item 1 or 2, wherein the refrigerant further comprises difluoromethane (R32).

Item 4.

A refrigeration method comprising operating a refrigeration cycle using the composition of any one of Items 1 to 3.

Item 5.

A refrigeration apparatus comprising the composition of any one of Items 1 to 3 as a working fluid.

Item 6.

The composition according to any one of Items 1 to 3, which is for use in operating an air-conditioning system for a vehicle.

Item 7.

A refrigeration apparatus comprising the composition of any one of Items 1 to 3 as a working fluid, wherein the refrigeration apparatus is an air conditioner for a gasoline vehicle, a hybrid vehicle, an electric vehicle, or a hydrogen vehicle.

Item 8.

The composition according to any one Items 1 to 3, which is for use as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, or R1234ze(E).

Advantageous Effects of Invention

The refrigerant (mixed refrigerant) of the present disclosure has low GWP.

Brief Description of Drawings

Fig. 1 is a ternary diagram illustrating a formulation of a refrigerant of the present disclosure.
Fig. 2 is a ternary diagram illustrating a formulation of a refrigerant of the present disclosure.

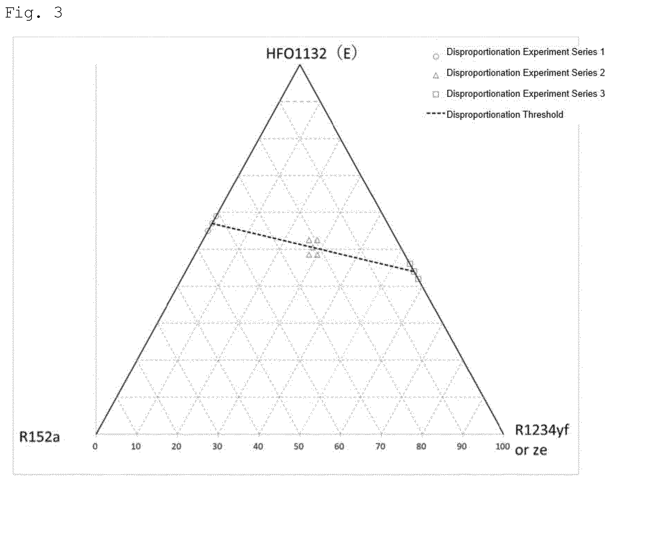

Fig. 3 is a ternary diagram showing the results of a disproportionation experiment and the disproportionation threshold line determined from the results.

Description of Embodiments

In order to achieve the above object, the present inventors conducted extensive research and found that the various mixed refrigerants described below have the characteristics described above.
The present disclosure has been completed as a result of further research based on this finding. The present disclosure includes the following embodiments.

Definition of Terms

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC) .
In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."
In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.
The term "alternative" also includes the second type of "alternative," which means that equipment designed for operation using the second refrigerant is operated for the same use as the existing use with the first refrigerant by using the second refrigerant. This type of alternative means that the same use is achieved with an alternative refrigerant.
In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work and thereby perform energy conversion, in order to transfer heat from where the temperature is lower to where the temperature is higher.

In the present specification, the term "air-conditioning system for vehicles" refers to a type of refrigeration apparatus used in vehicles such as gasoline vehicles, hybrid vehicles, electric vehicles, and hydrogen vehicles. The air-conditioning system for vehicles refers to a refrigeration apparatus including refrigeration cycles in which heat exchange is performed in a liquid refrigerant by an evaporator, the thus evaporated refrigerant gas is sucked by a compressor, the thus adiabatically compressed refrigerant gas is cooled to be liquefied by a condenser, the resultant is allowed to pass through an expansion valve for adiabatic expansion, and then the resultant is supplied again to the evaporator as a liquid refrigerant.

In the present specification, the refrigerant falling under the category of "toxicity class A" means that the occupational exposure limit (OEL) of a mixed refrigerant is 400 ppm or more according to the US ANSI/ASHRAE 34-2019 standard. The refrigerant falling under the category of "toxicity class B" means that the occupational exposure limit (OEL) of a mixed refrigerant is less than 400 ppm according to the US ANSI/ASHRAE 34-2019 standard.

In the present specification, the occupational exposure limit (OEL) of a mixed refrigerant refers to a value assessed at the center composition, unless otherwise indicated. However, the OEL of each refrigerant is calculated in accordance with the following:

HFO-1132 (E) : 350 ppm
R152a: 1000 ppm
R1234yf: 500 ppm
R1234ze(E): 800 ppm
R32: 1000 ppm

The OEL of a mixed refrigerant at the center composition is calculated by using the following formula.

$$OEL= \frac{1}{\dfrac{mf_1}{a_1} + \dfrac{mf_2}{a_2} + \ldots + \dfrac{mf_n}{a_n}}$$

In the formula, $a_n$ represents an OEL of each refrigerant compound, and $mf_n$ represents a mole fraction of each refrigerant compound.

The unit of pressure described in the present specification is absolute pressure, unless otherwise specified.

1. Refrigerant

The refrigerant of the present disclosure contains trans-1,2-difluoroethylene (HFO-1132(E)), 1,1-difluoroethane (R152a), and X in a total amount of 99.5 mass% or more based on the entire refrigerant, and X represents 2,3,3,3-tetrafluoropropene (HFO-1234yf) and/or trans-1,3,3,3-tetrafluoropropene (HFO-1234ze(E)). Of HFO-1132(E), R152a, and HFO-1234yf and/or HFO-1234ze(E) contained in the refrigerant of the present disclosure, a component contained in an amount of 0.5 mass% or more based on the entire refrigerant is referred to as an "essential refrigerant." The refrigerant of the present disclosure has substantially the same overall performance in terms of COP and refrigerating capacity when HFO-1123 is used instead of HFO-1132(E). As shown in the Examples, the refrigerant of the present disclosure may further contain difluoromethane (R32). X may be HFO-1234yf alone or HFO-1234ze(E) alone, or a mixture containing HFO-1234yf and HFO-1234ze(E) at any concentrations.

The refrigerant of the present disclosure (mixed refrigerant) is a low-GWP mixed refrigerant.

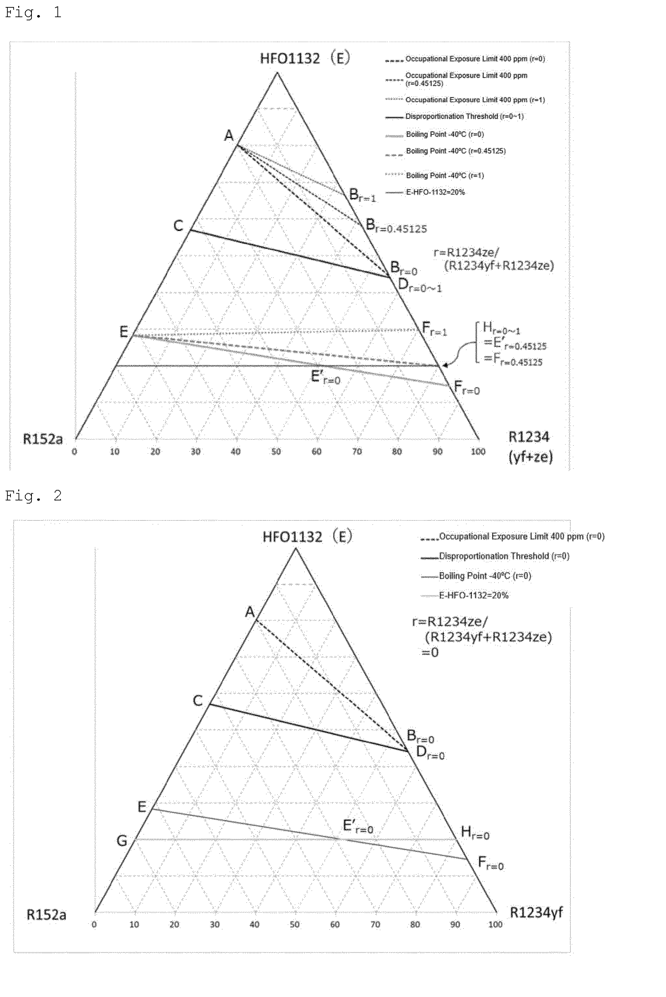

The refrigerant of the present disclosure has an occupational exposure limit of 400 ppm or more, falls under the category of ASHRAE toxicity class A, and has a boiling point of -40°C or below when coordinates (x,y,z) satisfy the following requirements in a ternary composition diagram in which the percentages by mass of HFO-1132(E), R152a, and X (HFO-1234yf and/or HFO-1234ze(E)) based on their sum are respectively x, y, and z, the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and the sum of HFO-1132(E), R152a, and X is 100 mass% (see Fig. 1).

r is 0≤r≤1. When r=0, X is HFO-1234yf alone. When r=1, X is HFO-1234ze(E) alone. When 0<r<1, X is a mixed refrigerant of HFO-1234yf and HFO-1234ze(E) (the same applies below).

Point A represents the coordinates at which the occupational exposure limit is 400 ppm on the edge indicating X=0 mass% on the perimeter of the ternary diagram, and point A is (80.2, 19.8, 0.0). Point $B_r$ represents the coordinates at which the occupational exposure limit is 400 ppm on the edge indicating R152a=0 mass% on the perimeter of the ternary diagram, and the coordinates varies according to the value of r. Point $H_r$ represents the intersection of the edge indicating R152a=0 mass% and the line segment (straight line) indicating HFO-1132(E)=20 mass% on the perimeter of the ternary diagram, with no change according to the value of r. Point $H_r$ is (20.0, 0.0, 80.0). Point E represents the coordinates at which the boiling point is -40°C on the edge indicating X=0 mass% on the perimeter of the ternary diagram, and point E is (28.3, 71.7, 0.0). Point $F_r$ represents the coordinates at which the boiling point is -40°C on the edge indicating R152a=0 mass% on the perimeter of the ternary diagram, and the coordinates varies according to the value of r.

Point C represents the disproportionation threshold on the edge indicating X=0 mass% on the perimeter of the ternary diagram, and point C is (57.0, 43.0, 0.0). Point $D_r$ represents the coordinates that is a disproportionation threshold on the edge indicating R152a=0 mass% on the perimeter of the ternary diagram, and the compositional structure of the mixed refrigerant varies according to the value of r, while the coordinates do not change with the value of r and remain at point $D_r$ (44.0, 0.0, 56.0). Point $E'_r$ represents the intersection of line segment $F_rE$ (straight line) and the line segment (straight line) indicating HFO-1132(E)=20 mass%, and the coordinates varies according to the value of r. When r=0.45125, $H_r=F_r=E'_r$.

Requirements

When 0≤r<0.45125, coordinates (x,y,z) fall within a figure surrounded by

> point A (80.2, 19.8, 0.0),
> point $B_r$ (-10.832$r^2$+33.032r+44.3, 0.0, 10.832$r^2$-33.032r+55.7),
> point $H_r$ (20.0, 0.0, 80.0),
> point $E'_r$ (20.0, -62.715r+28.3, 62.715r+51.7), and
> point E (28.3, 71.7, 0.0),

> or fall on any of line segment $AB_r$, $H_rE'_r$, or $E'_rE$ but do not fall on point A, point $B_r$, point $H_r$, or point E, and
> line segment $AB_r$, line segment $B_rH_r$, line segment $H_rE'_r$, line segment $E'_rE$, and line segment EA are straight lines.

When 0.45125≤r≤1.0, coordinates (x,y,z) fall within a figure surrounded by

> point A (80.2, 19.8, 0.0),
> point $B_r$ (-10.832$r^2$+33.032r+44.3, 0.0, 10.832$r^2$-33.032r+55.7),
> point $F_r$ (5.892$r^2$+9.308r+14.6, 0.0, -5.892$r^2$-9.308r+85.4), and
> point E (28.3, 71.7, 0.0),

> or fall on line segment $AB_r$ or $F_rE$ but do not fall on point A, point $B_r$, point $F_r$, or point E, and
> line segment $AB_r$, line segment $B_rF_r$, line segment $F_rE$, and line segment EA are straight lines.

In a ternary composition diagram in which

> the percentages by mass of HFO-1132(E), R152a, and X (HFO-1234yf and/or HFO-1234ze(E)) based on their sum in the refrigerant of the present disclosure are respectively x, y, and z,
> the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and
> the sum of HFO-1132(E), R152a, and X is 100 mass% (see Fig. 1),

when coordinates (x,y,z) satisfy the following requirements, the refrigerant of the present disclosure not only has an occupational exposure limit of 400 ppm or more, falls under the category of ASHRAE toxicity class A, and has a boiling point of - 40°C or below, but also does not undergo disproportionation reaction of HFO-1132(E) at 5.0 MPa at 150°C. Additionally, within this range, the refrigerant has GWP of 89 or less, as well as also a refrigerating capacity ratio of 54% or more and a COP ratio of 102% or more relative to R410A, and a refrigerating capacity ratio of 63% or more and a COP ratio of 103% or more relative to R404A.

Requirements

When 0≤r<0.45125, coordinates (x,y,z) fall within a figure surrounded by

> point C (57.0, 43.0, 0.0),
> point $D_r$ (44.0, 0.0, 56.0),
> point $H_r$ (20.0, 0.0, 80.0),
> point $E'_r$ (20.0, -62.715r+28.3, 62.715r+51.7), and
> point E (28.3, 71.7, 0.0),

or fall on any of line segment $CD_r$, $H_rE'_r$, or $E'_rE$ but do not fall on point C, point $D_r$, point $H_r$, or point E, and line segment $CD_r$, line segment $D_rH_r$, line segment $H_rE'_r$, line segment $E'_rE$, and line segment EA are straight lines.

When $0.45125 \le r \le 1.0$, coordinates (x,y,z) fall within a figure surrounded by

point C (57.0, 43.0, 0.0),
point $D_r$ (44.0, 0.0, 56.0),
point $F_r$ ($5.892r^2+9.308r+14.6$, 0.0, $-5.892r^2-9.308r+85.4$), and
point E (28.3, 71.7, 0.0),

or fall on any of line segment $CD_r$, $D_rF_r$, or $F_rE$ but do not fall on point C, point $D_r$, point $F_r$, or point E, and line segment $CD_r$, line segment $D_rF_r$, line segment $F_rE$, and line segment EC are straight lines.

In a ternary composition diagram in which

the percentages by mass of HFO-1132(E), R152a, and X (HFO-1234yf and/or HFO-1234ze(E)) in the refrigerant of the present disclosure based on their sum are respectively x, y, and z,
the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and
the sum of HFO-1132(E), R152a, and X is 100 mass% (see Fig. 1),

when coordinates (x,y,z) fall on straight line $AB_{0 \le r \le 1}$ or below straight line $AB_{0 \le r \le 1}$, the refrigerant has an occupational exposure limit of 400 ppm or more and falls under the category of ASHRAE toxicity class A.
In a ternary composition diagram in which

the percentages by mass of HFO-1132(E), R152a, and X (HFO-1234yf and/or HFO-1234ze(E)) in the refrigerant of the present disclosure based on their sum are respectively x, y, and z,
the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and
the sum of HFO-1132(E), R152a, and X is 100 mass% (see Fig. 1), when coordinates (x,y,z) fall on straight line $CD_{0 \le r \le 1}$ or below straight line $CD_{0 \le r \le 1}$, the refrigerant does not undergo disproportionation reaction at 5.0 MPa at 150°C. In this case, even if the refrigerant pressure locally reaches 5.0 MPa, and the refrigerant temperature reaches 150°C in the refrigeration cycle, the disproportionation reaction of HFO-1132(E) can be suppressed.

The refrigerant of the present disclosure has a boiling point of -40.0°C or below in a ternary composition diagram in which

the percentages by mass of HFO-1132(E), R152a, and X (HFO-1234yf and/or HFO-1234ze(E)) based on their sum are respectively x, y, and z,
the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and
the sum of HFO-1132(E), R152a, and X is 100 mass% (see Fig. 1), when the coordinates (x,y,z) fall on straight line $CD_{0 \le r \le 1}$ or below straight line $CD_{0 \le r \le 1}$, and fall on straight line $F_{0 \le r \le 1}E$ or above $F_{0 \le r \le 1}E$. The refrigerant of the present disclosure with a boiling point of -40.0° or below is advantageous in that it is easily used in heating with a heat pump. For example, using the refrigerant of the present disclosure in operating a refrigeration cycle of an air-conditioning system for vehicles advantageously enables heating with a heat pump that consumes less power than an electric heater. Examples of air-conditioning systems for vehicles include those for gasoline vehicles, hybrid vehicles, electric vehicles, hydrogen vehicles, or the like.

The refrigerant of the present disclosure contains HFO-1132(E) in an amount of 20 mass% or more, or may contain 30 mass% or more, 40 mass% or more, 50 mass% or more, 60 mass% or more, or 70 mass% or more based on the entire refrigerant. The upper limit of the content of HFO-1132(E) is less than 80.2 mass%, and more preferably 75 mass% or less. The refrigerant of the present disclosure may contain R152a in an amount of 10 mass% or more, 20 mass% or more, 30 mass% or more, 40 mass% or more, 50 mass% or more, 60 mass% or more, or 70 mass% or more based on the entire refrigerant. The upper limit of the content of R152a is less than 71.7 mass%. The refrigerant of the present disclosure may contain X (HFO-1234yf and/or HFO-1234ze(E)) in an amount of 10 mass% or more, 20 mass% or more, 30 mass% or more, 40 mass% or more, 50 mass% or more, 60 mass% or more, 70 mass% or more, 80 mass% or more, or 90 mass% or more based on the entire refrigerant wherein X is HFO-1234yf alone, HFO-1234ze(E) alone, or the total of HFO-1234yf and HFO-1234ze(E) when X is a mixture of HFO-1234yf and HFO-1234ze(E) .

When X is 2,3,3,3-tetrafluoropropene (HFO-1234yf) alone, the refrigerant of the present disclosure contains trans-1,2-difluoroethylene (HFO-1132(E)), 1,1-difluoroethane (R152a), and X in a total amount of 99.5 mass% or more based on the entire refrigerant, and X can be described as 2,3,3,3-tetrafluoropropene (HFO-1234yf).

In a ternary composition diagram in which the percentages by mass of HFO-1132(E), R152a, and X (HFO-1234yf) based on their sum in the refrigerant of the present disclosure are respectively x, y, and z, and the sum of HFO-1132(E), R152a, and X is 100 mass% (see Fig. 2), when coordinates (x,y,z) satisfy the following requirements, the refrigerant has an occupational exposure limit of 400 ppm or more, fall under the category of ASHRAE toxicity class A, and has a boiling point of -40°C or below.

Requirements

The coordinates (x,y,z) fall within a figure surrounded by

point A (80.2, 19.8, 0.0),
point B (44.3, 0.0, 55.7),
point H (20.0, 0.0, 80.0),
point E' (20.0, 28.3, 51.7), and
point E (28.3, 71.7, 0.0),

or fall on line segment AB, line segment HE', or line segment E'E but do not fall on point A, point B, point H, or point E, and line segment AB, line segment BH, line segment HE', line segment E'E, and line segment EA are straight lines (Fig. 2 indicates r=0, but r is omitted here).

In a ternary composition diagram in which the percentages by mass of HFO-1132(E), R152a, and X (HFO-1234yf and/or HFO-1234ze(E)) based on their sum in the refrigerant of the present disclosure are respectively x, y, and z, and the sum of HFO-1132(E), R152a, and X is 100 mass% (see Fig. 2), when coordinates (x,y,z) satisfy the following requirements, the refrigerant not only has an occupational exposure limit of 400 ppm or more, falls under the category of ASHRAE toxicity class A, and has a boiling point of -40°C or below, but also does not undergo disproportionation reaction of HFO-1132(E) at 5.0 MPa at 150°C. Within this range, the refrigerant of the present disclosure has GWP of 89 or less, as well as a refrigerating capacity ratio of 54% or more and a COP ratio of 102% or more relative to R410A, and a refrigerating capacity ratio of 63% or more and a COP ratio of 103% or more relative to R404A.

Requirements

The coordinates (x,y,z) fall within a figure surrounded by

point C (57.0, 43.0, 0.0),
point D (44.0, 0.0, 56.0),
point H (20.0, 0.0, 80.0),
point E' (20.0, 28.3, 51.7), and
point E (28.3, 71.7, 0.0),

or fall on line segment CD, line segment HE', or line segment E'E but do not fall on point C, point D, point H or point E, and line segment CD, line segment DH, line segment HE', line segment E'E, and line segment EA are straight lines (Fig. 2 indicates r=0, but r is omitted here).

The refrigerant of the present disclosure may further contain an additional refrigerant in addition to the essential refrigerants as long as the properties and effects described above are not impaired. In this respect, in one embodiment, the refrigerant of the present disclosure contain the essential refrigerants in a total amount of preferably 99.5 mass% or more, more preferably 99.75 mass% or more, even more preferably 99.9 mass% or more, still more preferably 99.999 mass% or more, and most preferably 99.9999 mass% or more based on the entire refrigerant. The refrigerant of the present disclosure may substantially consist of the essential refrigerants; in this case, the refrigerant of the present disclosure may consist of the essential refrigerants and unavoidable impurities. The refrigerant of the present disclosure may also consist of the essential refrigerants.

Additional refrigerants are not limited and can be selected from a wide range. The mixed refrigerant may contain one additional refrigerant, or two or more additional refrigerants. Examples of additional refrigerants include difluoromethane (R32), acetylene, methyl amine, HFO-1132a, HFO-1141, HFC-143a, HFC-134a, HFO-1132(E), HFO-1243zf, HFC-245cb, HCFC-1122, HCFC-124, CFC-1113, and 3,3,3-trifluoropropyne. Of these, R32 is preferred as an additional refrigerant from the viewpoint of improving the COP and refrigerating capacity. When R32 is added as an additional refrigerant, the content of R32 is preferably 10 mass% or more, and more preferably 20 mass% or more, based on the entire refrigerant. The content of R32 is also preferably 40 mass% or less, and more preferably 30 mass% or less, based on the entire refrigerant.

The refrigerant of the present disclosure can be used as an alternative refrigerant for, for example, R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, or R1234ze(E). Of these, the refrigerant of the present disclosure can be preferably used as an alternative refrigerant for either R410A or R404A, or both.

## 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

## 2.1. Water

The refrigerant composition according to the present disclosure may contain a small amount of water. The water content in the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

## 2.2. Tracer

A tracer is added to the refrigerant composition according to the present disclosure at a detectable concentration so that the tracer can trace changes in the refrigerant composition, such as dilution, contamination, or other changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3F$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152 (1,2-difluoroethane, $CH_2FCH_2F$)
HFC-161 (fluoroethane, $CH_3CH_2F$)
HFC-245fa (1,1,1, 3, 3-pentafluoropropane, $CF_3CH_2CHF_2$)

HFC-236fa (1,1,1, 3, 3, 3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The refrigerant composition of the present disclosure may comprise about 10 parts per million by weight (ppm) or more of tracers in total, based on the entire refrigerant composition. The refrigerant composition of the present disclosure may also comprise about 1000 ppm or less of tracers in total, based on the entire refrigerant composition. The refrigerant composition of the present disclosure may preferably comprise about 30 ppm or more and more preferably about 50 ppm or more of tracers in total, based on the entire refrigerant composition. The refrigerant composition of the present disclosure may preferably comprise about 500 ppm or less or about 300 ppm or less of tracers in total, based on the entire refrigerant composition.

2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

3. Refrigeration-oil-Containing Working Fluid

The refrigeration-oil-containing working fluid according to the present disclosure comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally contains 10 mass% or more of a refrigeration oil. The refrigeration-oil-containing working fluid generally contains 50 mass% or less of a refrigeration oil.

3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additives may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the viewpoint of lubrication. A refrigeration oil with a kinematic viscosity of 400 cSt or less at 40°C is preferable from the viewpoint of lubrication.

The refrigeration-oil-containing working fluid according to the present disclosure may further optionally comprise at least one additive. Examples of additives include compatibilizing agents described below.

3.2. Compatibilizing Agent

The refrigeration-oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

Use in ASHRAE Toxicity Class A

The present disclosure includes a method for use in ASHRAE toxicity class A. HFO-1132(E) is classified in toxicity class B; however, mixing HFO-1132(E) with R152a and X (HFO-1234yf and/or HFO-1234ze(E)) enables handling of the resulting mixed refrigerant in ASHRAE toxicity class A, in a similar manner as conventional R32 and R410A.

5. Method for Suppressing Disproportionation Reaction

A method for suppressing a disproportionation reaction according to the present disclosure is a method for suppressing a disproportionation reaction of HFO-1132(E) comprising the step of operating a refrigeration cycle using the refrigerant of the present disclosure.

The method for suppressing a disproportionation reaction according to the present disclosure provides the effect that a disproportionation reaction of HFO-1132(E) does not occur even at a refrigerant pressure of 5.0 MPa and at a refrigerant temperature of 150°C.

The method for suppressing a disproportionation reaction according to the present disclosure suppresses a disproportionation reaction even in a refrigerating machine not equipped with means for suppressing a disproportionation reaction to enable the operation of the refrigeration cycle.

6. Use for Suppressing Disproportionation Reaction

The use according to the present disclosure is use of R152a and X (HFO-1234yf and/or HFO-1234ze(E)) for suppressing a disproportionation reaction of HFO-1132(E), and the suppression of a disproportionation reaction is achieved by mixing HFO-1132(E) with R152a and X (HFO-1234yf and/or HFO-1234ze(E)) in the mixing ratio of the refrigerant of the present disclosure.

The use for suppressing a disproportionation reaction according to the present disclosure provides the effect that a disproportionation reaction of HFO-1132(E) does not occur, in particular, even at a refrigerant pressure of 5.0 MPa and at a refrigerant temperature of 150°C.

Embodiments of the present disclosure are described above; however, it will be understood that various changes in form and detail can be made without departing from the spirit and scope of the claims.

Examples

The present disclosure is described in more detail below with reference to Examples. However, the present disclosure is not limited to the Examples.

Mixed refrigerants were prepared by mixing HFO-1132(E), R152a, and X (HFO-1234yf and/or HFO-1234ze(E)) in the percentages by mass as shown in Table 1 based on their sum.

The occupational exposure limit (OEL) of each of these mixed refrigerants was investigated. Note that R1234ze in each table of the present disclosure refers to its trans form (E-R1234ze).

Table 1-1

| Item | | Unit | Reference Example 1 | Com.Ex. 1-1 A | Com.Ex. 1-2 $B_{r=0}$ | Com.Ex. 1-3 C | Com.Ex. 1-4 $D_{r=0}$ | Com.Ex. 1-5 E | Example 1-1 $E'_{r=0}$ | Com.Ex. 1-6 $H_{r=0}$ |
|---|---|---|---|---|---|---|---|---|---|---|
| Compositional Ratio | E-HFO-1132 | mass% | 0.0 | 80.2 | 44.3 | 57.0 | 44.0 | 28.3 | 20.0 | 20.0 |
| | R152a | mass% | 0.0 | 19.8 | 0.0 | 43.0 | 0.0 | 71.7 | 28.3 | 0.0 |
| | R1234yf | mass% | 100.0 | 0.0 | 55.7 | 0.0 | 56.0 | 0.0 | 51.7 | 80.0 |
| | R1234ze | mass% | 0.0 | 0.0 | 0.0 | 0.0 | 0.0 | 0.0 | 0.0 | 0.0 |
| GWP(AR4) | | - | | 4 | 25 | 3 | 77 | 3 | 89 | 89 | 0 |
| COP Ratio (Relative to R1234yf) | | % | 100 | 102 | 100 | 105 | 100 | 106 | 106 | 101 |
| Refrigerating Capacity Ratio (To R1234yf) | | % | 100 | 234 | 191 | 155 | 190 | 140 | 140 | 176 |
| Power Consumption for Driving Force | | % | 100 | 100 | 100 | 100 | 100 | 100 | 100 | 100 |
| Power Consumption for Heating | | % | 95 | 33 | 33 | 33 | 33 | 33 | 33 | 33 |
| Drivable Distance (Without Heating) | | % | 100 | 100 | 100 | 100 | 100 | 100 | 100 | 100 |
| Drivable Distance (With Heating) | | % | 50 | 84 | 84 | 84 | 84 | 84 | 84 | 84 |
| Boiling Point | | °C | -29.5 | -50.0 | -48.1 | -42.6 | -48.1 | -40.0 | -40.0 | -46.8 |
| Heating Method | | System | Electric Heater | Heat Pump | Heat Pump | Heat Pump | Heat Pump | Heat Pump | Heat Pump | Heat Pump |
| Occupational Exposure Limit (OEL) | | ppm | 500 | 400 | 400 | 482 | 400 | 650 | 536 | 442 |

Note: "Com.Ex." stands for Comparative Example (The same applies below).

Table 1-2

| Item | | Unit | Com.Ex. 1-7 $F_{r=0}$ | Com.Ex. 1-8 $B_{r=1}$ | Com.Ex. 1-9 $D_{r=1}$ | Com.Ex. 1-10 $F_{r=1}$ | Com.Ex. 1-11 $B_{r=0.45125}$ | Com.Ex. 1-12 $D_{r=0.45125}$ | Com.Ex. 1-13 $E'_{r=0.45125}$ $=F_{r=0.45125}$ $=H_{r=0.45125}$ |
|---|---|---|---|---|---|---|---|---|---|
| Compositional Ratio | E-HFO-1132 | mass% | 14.6 | 66.5 | 44.0 | 29.8 | 57.0 | 44.0 | 20.0 |
| | R152a | mass% | 0.0 | 0.0 | 0.0 | 0.0 | 0.0 | 0.0 | 0.0 |
| | R1234yf | mass% | 85.4 | 0.0 | 0.0 | 0.0 | 23.6 | 30.7 | 43.9 |
| | R1234ze | mass% | 0.0 | 33.5 | 56.0 | 70.2 | 19.4 | 25.3 | 36.1 |
| GWP(AR4) | | - | 4 | 3 | 4 | 5 | 0 | 0 | 0 |
| COP Ratio (Relative to R1234yf) | | % | 106 | 101 | 102 | 103 | 100 | 101 | 101 |
| Refrigerating Capacity Ratio (To R1234yf) | | % | 140 | 205 | 159 | 122 | 202 | 176 | 127 |
| Power Consumption for Driving Force | | % | 100 | 100 | 100 | 100 | 100 | 100 | 100 |
| Power Consumption for Heating | | % | 33 | 33 | 33 | 33 | 33 | 33 | 33 |
| Drivable Distance (Without Heating) | | % | 100 | 100 | 100 | 100 | 100 | 100 | 100 |
| Drivable Distance (With Heating) | | % | 84 | 84 | 84 | 84 | 84 | 84 | 84 |
| Boiling Point | | °C | -40.0 | -49.1 | -45.3 | -40.0 | -48.8 | -46.8 | -40.0 |
| Heating Method | | System | Heat Pump | Heat Pump | Heat Pump | Heat Pump | Heat Pump | Heat Pump | Heat Pump |
| Occupational Exposure Limit (OEL) | | ppm | 455 | 400 | 457 | 515 | 400 | 424 | 493 |

The coordinates on point $B_r$, point $D_r$, point $F_r$, and point $E'_r$ were determined using the least squares method based on the results for r = 0, r = 0.45125, and r = 1 within the range of $0 \leq r \leq 1$, as shown below. As is clear from the results shown in Table 1, the coordinates of point A, point C, and point E are constant within the range of $0 \leq r \leq 1$.

Table 2-1

| Point $B_r$ | | | |
|---|---|---|---|
| r | 0 | 0.45125 | 1 |
| E-HFO-1132 | 44.3 | 57.0 | 66.5 |
| R152a | 0.0 | 0.0 | 0.0 |
| R1234(yf+ze) | 55.7 | 43.0 | 33.5 |
| Approximate Expression of r: E-HFO-1132 | $-10.832r^2+33.032r+44.3$ | | |
| Approximate Expression of r R152a | 0.0 | | |
| Approximate Expression of r: R1234(yf+ze) | $10.832r^2-33.032r+55.7$ | | |

Table 2-2

| Point $D_r$ | | | |
|---|---|---|---|
| r | 0 | 0.45125 | 1 |
| E-HFO-1132 | 44.0 | 44.0 | 44.0 |
| R152a | 0.0 | 0.0 | 0.0 |
| R1234(yf+ze) | 56.0 | 56.0 | 56.0 |
| Approximate Expression of r: E-HFO-1132 | 44.0 | | |
| Approximate Expression of r: R152a | 0.0 | | |
| Approximate Expression of r: R1234(yf+ze) | 56.0 | | |

Table 2-3

| Point $F_r$ | | | |
|---|---|---|---|
| Item | 0 | 0.45125 | 1 |

(continued)

| Point F$_r$ | | | |
|---|---|---|---|
| E-HFO-1132 | 14.6 | 20.0 | 29.8 |
| R152a | 0.0 | 0.0 | 0.0 |
| R1234(yf+ze) | 85.4 | 80.0 | 70.2 |
| Approximate Expression of r: E-HFO-1132 | $5.892r^2+9.308r+14.6$ | | |
| Approximate Expression of r: R152a | 0.0 | | |
| Approximate Expression of r: R1234(yf+ze) | $-5.892r^2-9.308r+85.4$ | | |

Table 2-4

| Point E'$_r$ | | |
|---|---|---|
| Item | 0 | 0.45125 |
| E-HFO-1132 | 20.0 | 20.0 |
| R152a | 28.3 | 0.0 |
| R1234(yf+ze) | 51.7 | 80.0 |
| Approximate Expression of r. E-HFO-1132 | 20.0 | |
| Approximate Expression of r. R152a | $-62.715r+28.3$ | |
| Approximate Expression of r. R1234(yf+ze) | $62.715r+51.7$ | |

Table 2-5

| Point H$_r$ | | |
|---|---|---|
| Item | 0 | 0.45125 |
| E-HFO-1132 | 20.0 | 20.0 |
| R152a | 0.0 | 0.0 |
| R1234(yf+ze) | 80.0 | 80.0 |

The results shown in Table 1 indicate that when the coordinates (x,y,z) are within the region shown in the ternary diagram in Fig. 1, specifically falling on straight line $AB_{0\leq r\leq 1}$, or below straight line $AB_{0\leq r\leq 1}$, the refrigerant of the present disclosure has an occupational exposure limit of 400 ppm or more, falling under the category of ASHRAE toxicity class A.

Mixed refrigerants were prepared by mixing HFO-1132(E), R152a, and X (HFO-1234yf and/or HFO-1234ze(E)) in the percentages by mass as shown in Table 2 based on their sum.

Each of these mixed refrigerants was examined in terms of the presence or absence of a disproportionation reaction according to the following test method under the following test conditions.

Test Method

A refrigerant composition to be tested was transferred to and filled in a test container and heated to 150°C. Subsequently, a Pt wire in the container was melted and cut by applying a voltage, giving the refrigerant composition 30 J of energy. The presence or absence of disproportionation reaction was determined based on a rapid increase in the pressure and temperature in the apparatus.

Test Conditions

Test container: 38 cc SUS container
Test temperature: 150°C
Pressure: 5.0 MPa

Determination Criteria

Non-explosion: The temperature or pressure after cutting of the Pt wire was less than twice as high, and no rapid disproportionation reaction occurred.

Explosion: The temperature or pressure after cutting of the Pt wire reached double or more, and a rapid disproportionation reaction occurred.

Table 3-1

| Item | Unit | Experiment Series 1-1 | | | Experimental Series 1-2 | | | | | Experimental Series 1-3 | | |
|---|---|---|---|---|---|---|---|---|---|---|---|---|
| | | Ref.Ex. 1-1 | Ref.Ex. 1-2 | Ref.Ex. 1-3 | Ref.Ex. 1-4 | Ref.Ex. 1-5 | Ref.Ex. 1-6 | Ref.Ex. 1-7 | Ref.Ex. 1-8 | Ref.Ex. 1-9 | Ref.Ex. 1-10 | Ref.Ex. 1-11 |
| HFO-1132 (E) | mass% | 59.0 | 57.0 | 55.0 | 52.5 | 52.5 | 50.5 | 48.5 | 48.5 | 46.0 | 44.0 | 42.0 |
| R152a | mass% | 41.0 | 43.0 | 45.0 | 21.5 | 19.5 | 21.5 | 21.5 | 23.5 | 0.0 | 0.0 | 0.0 |
| R1234yf | mass% | 0.0 | 0.0 | 0.0 | 26.0 | 28.0 | 28.0 | 30.0 | 28.0 | 54.0 | 56.0 | 58.0 |
| Dispro. Reaction (5Mpa) | - | Explosion | Non-explosion | Non-explosion | Explosion | Explosion | Non-explosion | Non-explosion | Non-explosion | Explosion | Non-explosion | Non-explosion |

Note: "Dispro.Rection" stands for Disproportionation Reaction (The same applies below).

Note: "Ref.Ex" stands for Reference Example (The same applies below).

Table 3-2

| Item | Unit | Experimental Series 2-1 | | | Experimental Series 2-2 | | | | | Experimental Series 2-3 | | |
|---|---|---|---|---|---|---|---|---|---|---|---|---|
| | | Ref.Ex. 2-1 | Ref.Ex. 2-2 | Ref.Ex. 2-3 | Ref.Ex. 2-4 | Ref.Ex. 2-5 | Ref.Ex. 2-6 | Ref.Ex. 2-7 | Ref.Ex. 2-8 | Ref.Ex. 2-9 | Ref.Ex. 2-10 | Ref.Ex. 2-11 |
| HFO-1132 (E) | mass% | 59.0 | 57.0 | 55.0 | 52.5 | 52.5 | 50.5 | 48.5 | 48.5 | 46.0 | 44.0 | 42.0 |
| R152a | mass% | 41.0 | 43.0 | 45.0 | 21.5 | 19.5 | 21.5 | 21.5 | 23.5 | 0.0 | 0.0 | 0.0 |
| R1234yf | mass% | 0.0 | 0.0 | 0.0 | 13.0 | 14.0 | 14.0 | 15.0 | 14.0 | 27.0 | 28.0 | 29.0 |
| R1234ze | mass% | 0.0 | 0.0 | 0.0 | 13.0 | 14.0 | 14.0 | 15.0 | 14.0 | 27.0 | 28.0 | 29.0 |
| Dispro. Reaction (5Mpa) | - | Explosion | Non-explosion | Non-explosion | Explosion | Explosion | Non-explosion | Non-explosion | Non-explosion | Explosion | Non-explosion | Non-explosion |

Table 3-3

| Item | Unit | Experimental Series 3-1 | | | Experimental Series 3-2 | | | | | Experimental Series 3-3 | | |
|---|---|---|---|---|---|---|---|---|---|---|---|---|
| | | Ref.Ex. 3-1 | Ref.Ex. 3-2 | Ref.Ex. 3-3 | Ref.Ex. 3-4 | Ref.Ex. 3-5 | Ref.Ex. 3-6 | Ref.Ex. 3-7 | Ref.Ex. 3-8 | Ref.Ex. 3-9 | Ref.Ex. 3-10 | Ref.Ex. 3-11 |
| HFO-1132 (E) | mass% | 59.0 | 57.0 | 55.0 | 52.5 | 52.5 | 50.5 | 48.5 | 48.5 | 46.0 | 44.0 | 42.0 |
| R152a | mass% | 41.0 | 43.0 | 45.0 | 21.5 | 19.5 | 21.5 | 21.5 | 23.5 | 0.0 | 0.0 | 0.0 |
| R1234ze | mass% | 0.0 | 0.0 | 0.0 | 26.0 | 28.0 | 28.0 | 30.0 | 28.0 | 54.0 | 56.0 | 58.0 |
| Dispro. Reaction (5Mpa) | - | Explosion | Non-explosion | Non-explosion | Explosion | Explosion | Non-explosion | Non-explosion | Non-explosion | Explosion | Non-explosion | Non-explosion |

The results shown in Table 3 indicate that when the coordinates (x,y,z) are within the region shown in the ternary diagram in Fig. 1, specifically falling on straight line $CD_{0 \leq r \leq 1}$, or below straight line $CD_{0 \leq r \leq 1}$, no disproportionation reaction occurs at 5.0 MPa at 150°C in the refrigerant of the present disclosure.

The GWP of the mixed refrigerants was evaluated with the GWP of HFO-1132(E) set to 1, and with the GWP of R152a and X (HFO-1234yf and/or HFO-1234ze(E)) based on the values stated in the IPCC (Intergovernmental Panel on Climate Change), fourth report. The COP, refrigerating capacity, discharge temperature, and boiling point of the mixed refrigerants were determined by computing theoretical refrigeration cycles for mixed refrigerants by using the National Institute of Science and Technology (NIST) Reference Fluid Thermodynamic and Transport Properties Database (Refprop 10.0) under the following conditions. The physical properties data of HFO-1132 (E) to be used in the theoretical refrigeration cycle calculation were obtained by actual measurement and added to Refprop 10.0.

Ratio relative to R410A

Evaporating temperature: 5°C
Condensation temperature: 45°C
Superheating temperature: 5K
Subcooling temperature: 5K
Compressor efficiency: 70%

Ratio relative to R1234yf

Evaporating temperature: -30°C
Condensation temperature: 30°C
Superheating temperature: 5 K
Subcooling temperature: 5 K
Compressor efficiency: 70%

Ratio relative to R404A

Evaporating temperature: -40°C
Condensation temperature: 40°C
Superheating temperature: 20 K
Subcooling temperature: 0 K
Compressor efficiency: 70%

In the following tables, "COP Ratio" and "Refrigerating Capacity Ratio" each indicate a ratio (%) relative to R410A, R404A, or R1234yf. In these tables, "Boiling Point" (°C) is a temperature at which the liquid phase of a mixed refrigerant has atmospheric pressure (101.33 kPa).

The coefficient of performance (COP) was obtained in accordance with the following formula:

COP = (refrigerating capacity or heating capacity)/power consumption

In the following tables, "Power Consumption for Driving Force" (%) indicates electrical energy used by an electric vehicle for driving, and is expressed as a ratio with respect to the power consumption when the refrigerant is HFO-1234yf. In the tables, "Power Consumption for Heating" (%) indicates electrical energy used by an electric vehicle for operating a heater, and is expressed as a ratio with respect to the power consumption when the refrigerant is HFO-1234yf.

In the tables below, "Drivable Distance (With Heating)" refers to the relative percentage (%) of the drivable distance in driving with heating, compared to the drivable distance without heating, which is set as 100%, assuming no power consumption for heating in an electric vehicle equipped with a secondary battery of a predetermined electrical capacity.

Regarding the heating method, an electric heater system was used for heating with a refrigerant having a boiling point of higher than -40°C, and a heat pump system was used for heating with a refrigerant having a boiling point of -40°C or below.

The power consumption during heating operation was determined using the following formula. "Heating COP" indicates heating efficiency.

Power Consumption during Heating Operation = Heating Capacity/Heating COP

Regarding heating efficiency, when an electric heater is used, Heating COP = 1. Electricity equivalent to that used for driving force is consumed for heating. In other words, the power consumption for heating is E = E/(1 + COP).

The drivable distance was determined using the following formula:

Drivable distane = (battery capacity)/(power consumption for driving force + power consumption for heating)

These values, along with the GWP for each mixed refrigerant, are shown in Table 1 and the following tables.

Table 4-1

| Item | | Unit | Ref Ex 1 | Example 1-1 | Example 1-2 | Example 1-3 | Example 1-4 | Example 1-5 | Example 1-6 | Example 1-7 | Example 1-8 | Example 1-9 |
|---|---|---|---|---|---|---|---|---|---|---|---|---|
| Compositional Ratio | E-HFO-1132 | mass% | 0.0 | 10.0 | 10.0 | 10.0 | 10.0 | 20.0 | 20.0 | 20.0 | 20.0 | 30.0 |
| | R152a | mass% | 0.0 | 10.0 | 30.0 | 50.0 | 70.0 | 10.0 | 30.0 | 50.0 | 70.0 | 10.0 |
| | R1234yf | mass% | 100.0 | 80.0 | 60.0 | 40.0 | 20.0 | 70.0 | 50.0 | 30.0 | 10.0 | 60.0 |
| | R1234ze | mass% | 0.0 | 0.0 | 0.0 | 0.0 | 0.0 | 0.0 | 0.0 | 0.0 | 0.0 | 0.0 |
| | R32 | mass% | 0.0 | 0.0 | 0.0 | 0.0 | 0.0 | 0.0 | 0.0 | 0.0 | 0.0 | 0.0 |
| GWP(AR4) | | - | 4 | 16 | 40 | 64 | 88 | 15 | 39 | 63 | 87 | 15 |
| COP Ratio (Relative to R1234yf) | | % | 100 | 102 | 104 | 105 | 106 | 102 | 104 | 105 | 106 | 102 |
| Refrigerating Capacity Ratio (To R1234yf) | | % | 100 | 123 | 123 | 121 | 117 | 142 | 141 | 136 | 130 | 162 |
| Power Consumption for Driving Force | | % | 100 | 100 | 100 | 100 | 100 | 100 | 100 | 100 | 100 | 100 |
| Power Consumption for Heating | | % | 95 | 95 | 95 | 95 | 95 | 33 | 33 | 95 | 95 | 33 |
| Drivable Distance (Without Heating) | | % | 100 | 100 | 100 | 100 | 100 | 100 | 100 | 100 | 100 | 100 |
| Drivable Distance (With Heating) | | % | 50 | 50 | 50 | 50 | 50 | 84 | 84 | 50 | 50 | 84 |
| Boiling Point | | °C | -29.5 | -36.9 | -35.9 | -34.9 | -33.7 | -41.6 | -40.2 | -39.1 | -37.8 | -44.5 |
| Heating Method | | System | Electric Heater | Electric Heater | Electric Heater | Electric Heater | Electric Heater | Heat Pump | Heat Pump | Electric Heater | Electric Heater | Heat Pump |
| Occupational Exposure Limit (OEL) | | ppm | 500 | 504 | 582 | 664 | 749 | 474 | 542 | 612 | 686 | 451 |

Table 4-2

| Item | | Unit | Example 1-10-1 | Example 1-10-2 | Example 1-10-3 | Example 1-10-4 | Example 1-11 | Example 1-12 | Example 1-13 | Example 1-14 | Example 1-15 | Example 1-16 |
|---|---|---|---|---|---|---|---|---|---|---|---|---|
| Compositional Ratio | E-HFO-1132 | mass% | 30.0 | 20.0 | 10.0 | 0.0 | 30.0 | 40.0 | 40.0 | 40.0 | 60.0 | 80.0 |
| | R152a | mass% | 30.0 | 30.0 | 30.0 | 30.0 | 50.0 | 10.0 | 30.0 | 50.0 | 20.0 | 10.0 |
| | R1234yf | mass% | 40.0 | 40.0 | 40.0 | 40.0 | 20.0 | 50.0 | 30.0 | 10.0 | 20.0 | 10.0 |
| | R1234ze | mass% | 0.0 | 0.0 | 0.0 | 0.0 | 0.0 | 0.0 | 0.0 | 0.0 | 0.0 | 0.0 |
| | R32 | mass% | 0.0 | 10.0 | 20.0 | 30.0 | 0.0 | 0.0 | 0.0 | 0.0 | 0.0 | 0.0 |
| GWP(AR4) | | - | 39 | 107 | 174 | 241 | 63 | 15 | 39 | 63 | 26 | 14 |
| COP Ratio (Relative to R1234yf) | | % | 103 | 104 | 104 | 104 | 105 | 102 | 103 | 104 | 102 | 101 |
| Refrigerating Capacity Ratio (To R1234yf) | | % | 157 | 162 | 165 | 167 | 151 | 180 | 173 | 164 | 208 | 244 |
| Power Consumption for Driving Force | | % | 100 | 100 | 100 | 100 | 100 | 100 | 100 | 100 | 100 | 100 |
| Power Consumption for Heating | | % | 33 | 33 | 33 | 33 | 33 | 33 | 33 | 33 | 33 | 33 |
| Drivable Distance (Without Heating) | | % | 100 | 100 | 100 | 100 | 100 | 100 | 100 | 100 | 100 | 100 |
| Drivable Distance (With Heating) | | % | 84 | 84 | 84 | 84 | 84 | 84 | 84 | 84 | 84 | 84 |
| Boiling Point | | °C | -43.0 | -43.8 | -43.6 | -43.0 | -41.8 | -48.8 | -45.0 | -43.7 | -48.3 | -50.7 |
| Heating Method | | System | Heat Pump | Heat Pump | Heat Pump | Heat Pump | Heat Pump | Heat Pump | Heat Pump | Heat Pump | Heat Pump | Heat Pump |
| Occupational Exposure Limit (OEL) | | ppm | 511 | 545 | 600 | 697 | 573 | 432 | 485 | 541 | 425 | 382 |

Table 4-3

| Item | | Unit | Ref Ex 1 | Example 2-1 | Example 2-2 | Example 2-3 | Example 2-4 | Example 2-5 | Example 2-6 | Example 2-7 | Example 2-8 | Example 2-9 |
|---|---|---|---|---|---|---|---|---|---|---|---|---|
| Compositional Ratio | E-HFO-1132 | mass% | 0.0 | 10.0 | 10.0 | 10.0 | 10.0 | 20.0 | 20.0 | 20.0 | 20.0 | 30.0 |
| | R152a | mass% | 0.0 | 10.0 | 30.0 | 50.0 | 70.0 | 10.0 | 30.0 | 50.0 | 70.0 | 10.0 |
| | R1234yf | mass% | 100.0 | 43.9 | 32.9 | 21.9 | 11.0 | 38.4 | 27.4 | 16.5 | 5.5 | 32.9 |
| | R1234ze | mass% | 0.0 | 36.1 | 27.1 | 18.1 | 9.0 | 31.6 | 22.6 | 13.5 | 4.5 | 27.1 |
| | R32 | mass% | 0.0 | 0.0 | 0.0 | 0.0 | 0.0 | 0.0 | 0.0 | 0.0 | 0.0 | 0.0 |
| GWP(AR4) | | - | 4 | 16 | 40 | 64 | 88 | 15 | 40 | 64 | 87 | 15 |
| COP Ratio (Relative to R1234yf) | | % | 100 | 103 | 104 | 105 | 106 | 102 | 104 | 105 | 106 | 102 |
| Refrigerating Capacity Ratio (To R1234yf) | | % | 100 | 112 | 116 | 116 | 115 | 130 | 133 | 132 | 129 | 149 |
| Power Consumption for Driving Force | | % | 100 | 100 | 100 | 100 | 100 | 100 | 100 | 100 | 100 | 100 |
| Power Consumption for Heating | | % | 95 | 95 | 95 | 95 | 95 | 95 | 95 | 95 | 95 | 33 |
| Drivable Distance (Without Heating) | | % | 100 | 100 | 100 | 100 | 100 | 100 | 100 | 100 | 100 | 100 |
| Drivable Distance (With Heating) | | % | 50 | 50 | 50 | 50 | 50 | 50 | 50 | 50 | 50 | 84 |
| Boiling Point | | °C | -29.5 | -34.5 | -34.3 | -33.8 | -33.1 | -39.5 | -38.8 | -38.2 | -37.5 | -42.9 |
| Heating Method | | System | Electric Heater | Electric Heater | Electric Heater | Electric Heater | Electric Heater | Electric Heater | Electric Heater | Electric Heater | Electric Heater | Heat Pump |
| Occupational Exposure Limit (OEL) | | ppm | 500 | 572 | 640 | 708 | 774 | 522 | 581 | 639 | 696 | 485 |

Table 4-4

18

| Item | | Unit | Example 2-10-1 | Example 2-10-2 | Example 2-10-3 | Example 2-10-4 | Example 2-11 | Example 2-12 | Example 2-13 | Example 2-14 | Example 2-15 | Example 2-16 |
|---|---|---|---|---|---|---|---|---|---|---|---|---|
| Compositional Ratio | E-HFO-1132 | mass% | 30.0 | 20.0 | 10.0 | 0.0 | 30.0 | 40.0 | 40.0 | 40.0 | 60.0 | 80.0 |
| | R152a | mass% | 30.0 | 30.0 | 30.0 | 30.0 | 50.0 | 10.0 | 30.0 | 50.0 | 20.0 | 10.0 |
| | R1234yf | mass% | 21.9 | 21.9 | 21.9 | 21.9 | 11.0 | 27.4 | 16.5 | 5.5 | 11.0 | 5.5 |
| | R1234ze | mass% | 18.1 | 18.1 | 18.1 | 18.1 | 9.0 | 22.6 | 13.5 | 4.5 | 9.0 | 4.5 |
| | R32 | mass% | 0.0 | 10.0 | 20.0 | 30.0 | 0.0 | 0.0 | 0.0 | 0.0 | 0.0 | 0.0 |
| GWP(AR4) | | - | 39 | 107 | 174 | 242 | 63 | 15 | 39 | 63 | 26 | 14 |
| COP Ratio (Relative to R1234yf) | | % | 104 | 104 | 105 | 105 | 105 | 102 | 103 | 104 | 102 | 101 |
| Refrigerating Capacity Ratio (To R1234yf) | | % | 150 | 155 | 159 | 161 | 147 | 168 | 167 | 162 | 201 | 239 |
| Power Consumption for Driving Force | | % | 100 | 100 | 100 | 100 | 100 | 100 | 100 | 100 | 100 | 100 |
| Power Consumption for Heating | | % | 33 | 33 | 33 | 33 | 33 | 33 | 33 | 33 | 33 | 33 |
| Drivable Distance (Without Heating) | | % | 100 | 100 | 100 | 100 | 100 | 100 | 100 | 100 | 100 | 100 |
| Drivable Distance (With Heating) | | % | 84 | 84 | 84 | 84 | 84 | 84 | 84 | 84 | 84 | 84 |
| Boiling Point | | °C | -41.9 | -42.8 | -42.7 | -42.2 | -41.2 | -45.2 | -44.2 | -43.4 | -47.8 | -50.5 |
| Heating Method | | System | Heat Pump | Heat Pump | Heat Pump | Heat Pump | Heat Pump | Heat Pump | Heat Pump | Heat Pump | Heat Pump | Heat Pump |
| Occupational Exposure Limit (OEL) | | ppm | 536 | 579 | 648 | 777 | 587 | 456 | 501 | 547 | 433 | 385 |

Table 4-5

| Item | | Unit | Ref. Ex. 1 | Example 3-1 | Example 3-2 | Example 3-3 | Example 3-4 | Example 3-5 | Example 3-6 | Example 3-7 | Example 3-8 | Example 3-9 |
|---|---|---|---|---|---|---|---|---|---|---|---|---|
| Compositional Ratio | E-HFO-1132 | mass% | 0.0 | 10.0 | 10.0 | 10.0 | 10.0 | 20.0 | 20.0 | 20.0 | 20.0 | 30.0 |
| | R152a | mass% | 0.0 | 10.0 | 30.0 | 50.0 | 70.0 | 10.0 | 30.0 | 50.0 | 70.0 | 10.0 |
| | R1234yf | mass% | 100.0 | 0.0 | 0.0 | 0.0 | 0.0 | 0.0 | 0.0 | 0.0 | 0.0 | 0.0 |
| | R1234ze | mass% | 0.0 | 80.0 | 60.0 | 40.0 | 20.0 | 70.0 | 50.0 | 30.0 | 10.0 | 60.0 |
| | R32 | mass% | 0.0 | 0.0 | 0.0 | 0.0 | 0.0 | 0.0 | 0.0 | 0.0 | 0.0 | 0.0 |
| GWP(AR4) | | - | 4 | 17 | 41 | 65 | 88 | 17 | 40 | 64 | 88 | 16 |
| COP Ratio (Relative to R1234yf) | | % | 100 | 104 | 105 | 106 | 107 | 104 | 105 | 106 | 106 | 104 |
| Refrigerating Capacity Ratio (To R1234yf) | | % | 100 | 94 | 103 | 109 | 112 | 112 | 121 | 126 | 127 | 131 |
| Power Consumption for Driving Force | | % | 100 | 100 | 100 | 100 | 100 | 100 | 100 | 100 | 100 | 100 |
| Power Consumption for Heating | | % | 95 | 95 | 95 | 95 | 95 | 95 | 95 | 95 | 95 | 33 |
| Drivable Distance (Without Heating) | | % | 100 | 100 | 100 | 100 | 100 | 100 | 100 | 100 | 100 | 100 |
| Drivable Distance (With Heating) | | % | 50 | 50 | 50 | 50 | 50 | 50 | 50 | 50 | 50 | 84 |
| Boiling Point | | °C | -29.5 | -29.9 | -31.2 | -31.9 | -32.2 | -35.9 | -36.5 | -36.9 | -37.1 | -40.2 |
| Heating Method | | System | Electric Heater | Electric Heater | Electric Heater | Electric Heater | Electric Heater | Electric Heater | Electric Heater | Electric Heater | Electric Heater | Heat Pump |
| Occupational Exposure Limit (OEL) | | ppm | 500 | 684 | 729 | 770 | 806 | 595 | 636 | 674 | 708 | 534 |

Table 4-6

| Item | | Unit | Example 3-10-1 | Example 3-10-2 | Example 3-10-3 | Example 3-10-4 | Example 3-11 | Example 3-12 | Example 3-13 | Example 3-14 | Example 3-15 | Example 3-16 |
|---|---|---|---|---|---|---|---|---|---|---|---|---|
| Compositional Ratio | E-HFO-1132 | mass% | 30.0 | 20.0 | 10.0 | 0.0 | 30.0 | 40.0 | 40.0 | 40.0 | 60.0 | 80.0 |
| | R152a | mass% | 30.0 | 30.0 | 30.0 | 30.0 | 50.0 | 10.0 | 30.0 | 50.0 | 20.0 | 10.0 |
| | R1234yf | mass% | 0.0 | 0.0 | 0.0 | 0.0 | 0.0 | 0.0 | 0.0 | 0.0 | 0.0 | 0.0 |
| | R1234ze | mass% | 40.0 | 40.0 | 40.0 | 40.0 | 20.0 | 50.0 | 30.0 | 10.0 | 20.0 | 10.0 |
| | R32 | mass% | 0.0 | 10.0 | 20.0 | 30.0 | 0.0 | 0.0 | 0.0 | 0.0 | 0.0 | 0.0 |
| GWP(AR4) | | - | 40 | 107 | 175 | 242 | 64 | 16 | 39 | 63 | 27 | 14 |
| COP Ratio (Relative to R1234yf) | | % | 104 | 105 | 105 | 106 | 105 | 103 | 104 | 105 | 102 | 101 |
| Refrigerating Capacity Ratio (To R1234yf) | | % | 139 | 144 | 148 | 151 | 143 | 150 | 157 | 160 | 193 | 233 |
| Power Consumption for Driving Force | | % | 100 | 100 | 100 | 100 | 100 | 100 | 100 | 100 | 100 | 100 |
| Power Consumption for Heating | | % | 33 | 33 | 33 | 33 | 33 | 33 | 33 | 33 | 33 | 33 |
| Drivable Distance (Without Heating) | | % | 100 | 100 | 100 | 100 | 100 | 100 | 100 | 100 | 100 | 100 |
| Drivable Distance (With Heating) | | % | 84 | 84 | 84 | 84 | 84 | 84 | 84 | 84 | 84 | 84 |
| Boiling Point | | °C | -40.3 | -41.4 | -41.4 | -41.0 | -40.4 | -43.3 | -43.1 | -43.0 | -47.2 | -50.2 |
| Heating Method | | System | Heat Pump | Heat Pump | Heat Pump | Heat Pump | Heat Pump | Heat Pump | Heat Pump | Heat Pump | Heat Pump | Heat Pump |
| Occupational Exposure Limit (OEL) | | ppm | 571 | 626 | 718 | 902 | 605 | 489 | 523 | 554 | 442 | 389 |

The results indicate that the refrigerant of the present disclosure has an occupational exposure limit of 400 ppm or more, falls under the category of ASHRAE toxicity class A, and has a boiling point of -40°C or below, when the coordinates (x,y,z) satisfy the following requirements in a ternary composition diagram in which the percentages by mass of HFO-1132(E), R152a, and X (HFO-1234yf and/or HFO-1234ze(E)) based on their sum are respectively x, y, and z, the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and the sum of HFO-1132(E), R152a, and X is 100 mass% (see Fig. 1).

Requirements

When 0≤r<0.45125, coordinates (x,y,z) fall within a figure surrounded by

point A (80.2, 19.8, 0.0),
point $B_r$ (-10.832$r^2$+33.032r+44.3, 0.0, 10.832$r^2$-33.032r+55.7),
point $H_r$ (20.0, 0.0, 80.0),
point $E'_r$ (20.0, -62.715r+28.3, 62.715r+51.7), and
point E (28.3, 71.7, 0.0),

or fall on any of line segment $AB_r$, $H_rE'_r$, or $E'_rE$ but do not fall on point A, point $B_r$, point $H_r$, or point E, and line segment $AB_r$, line segment $B_rH_r$, line segment $H_rE'_r$, line segment $E'_rE$, and line segment EA are straight lines.
When 0.45125≤r≤1.0, coordinates (x,y,z) fall within a figure surrounded by

point A (80.2, 19.8, 0.0),
point $B_r$ (-10.832$r^2$+33.032r+44.3, 0.0, 10.832$r^2$-33.032r+55.7),
point $F_r$ (5.892$r^2$+9.308r+14.6, 0.0, -5.892$r^2$-9.308r+85.4), and
point E (28.3, 71.7, 0.0),

or fall on line segment $AB_r$ or $F_rE$ but do not fall on point A, point $B_r$, point $F_r$, or point E, and line segment $AB_r$, line segment $B_rF_r$, line segment $F_rE$, and line segment EA are straight lines.
The results also indicate that the refrigerant of the present disclosure not only has an occupational exposure limit of 400 ppm or more, falls under the category of ASHRAE toxicity class A, and has a boiling point of -40°C or below, but also does not undergo disproportionation reaction of HFO-1132(E) at 5.0 MPa at 150°C, when the coordinates (x,y,z) satisfy the following requirements in a ternary composition diagram in which the percentages by mass of HFO-1132(E), R152a, and X (HFO-1234yf and/or HFO-1234ze(E)) based on their sum are respectively x, y, and z, the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and the sum of HFO-1132(E), R152a, and X is 100 mass% (see Fig. 1).
Additionally, within this range, the refrigerant of the present disclosure has GWP of 89 or less, as well as a refrigerating capacity ratio of 54% or more and a COP ratio of 102% or more relative to R410A, and a refrigerating capacity ratio of 63% or more and a COP ratio of 103% or more relative to R404A.

Requirements

When 0≤r<0.45125, coordinates (x,y,z) fall within a figure surrounded by

point C (57.0, 43.0, 0.0),
point $D_r$ (44.0, 0.0, 56.0),
point $H_r$ (20.0, 0.0, 80.0),
point $E'_r$ (20.0, -62.715r+28.3, 62.715r+51.7), and
point E (28.3, 71.7, 0.0),

or fall on any of line segment $CD_r$, $H_rE'_r$, or $E'_rE$ but do not fall on point C, point $D_r$, point $H_r$, or point E, and line segment $CD_r$, line segment $D_rH_r$, line segment $H_rE'_r$, line segment $E'_rE$, and line segment EA are straight lines.
When 0.45125≤r≤1. 0, coordinates (x,y,z) fall within a figure surrounded by

point C (57.0, 43.0, 0.0),
point $D_r$ (44.0, 0.0, 56.0),
point $F_r$ (5.892$r^2$+9.308r+14.6, 0.0, -5.892$r^2$-9.308r+85.4), and
point E (28.3, 71.7, 0.0),

or fall on any of line segment $CD_r$, $D_rF_r$, or $F_rE$ but do not fall on point C, point $D_r$, point $F_r$, or point E, and line segment $CD_r$, line segment $D_rF_r$, line segment $F_rE$, and line segment EC are straight lines.

Table 5-1

| Item | | Unit | Ref. Ex. 2 | Example 1-17 | Example 1-18-1 | Example 1-18-2 | Example 1-18-3 | Example 1-19 | Example 2-17 | Example 2-18-1 |
|---|---|---|---|---|---|---|---|---|---|---|
| Compositional Ratio | E-HFO-1132 | mass% | R410A | 30.0 | 30.0 | 15.0 | 0.0 | 30.0 | 30.0 | 30.0 |
| | R152a | mass% | | 10.0 | 30.0 | 30.0 | 30.0 | 50.0 | 10.0 | 30.0 |
| | R1234yf | mass% | | 60.0 | 40.0 | 40.0 | 40.0 | 20.0 | 32.9 | 21.9 |
| | R1234ze | mass% | | 0.0 | 0.0 | 0.0 | 0.0 | 0.0 | 27.1 | 18.1 |
| | R32 | mass% | | 0.0 | 0.0 | 15.0 | 30.0 | 0.0 | 0.0 | 0.0 |
| GWP(AR4) | | - | 2088 | 13 | 38 | 139 | 240 | 63 | 13 | 38 |
| COP Ratio (Relative to R1234yf) | | % | 100 | 104 | 106 | 106 | 106 | 107 | 105 | 106 |
| Refrigerating Capacity Ratio (To R1234yf) | | % | 100 | 64 | 63 | 65 | 66 | 61 | 61 | 61 |
| Occupational Exposure Limit (OEL) | | ppm | 1000 | 451 | 511 | 653 | 828 | 573 | 485 | 536 |

Table 5-2

| Item | | Unit | Example 2-18-2 | Example 2-18-3 | Example 2-19 | Example 3-17 | Example 2-18-1 | Example 3-18-2 | Example 3-18-3 | Example 3-19 |
|---|---|---|---|---|---|---|---|---|---|---|
| Compositional Ratio | E-HFO-1132 | mass% | 15.0 | 0.0 | 30.0 | 30.0 | 30.0 | 15.0 | 0.0 | 30.0 |
| | R152a | mass% | 30.0 | 30.0 | 50.0 | 10.0 | 30.0 | 30.0 | 30.0 | 50.0 |
| | R1234yf | mass% | 21.9 | 21.9 | 11.0 | 0.0 | 0.0 | 0.0 | 0.0 | 0.0 |
| | R1234ze | mass% | 18.1 | 18.1 | 9.0 | 60.0 | 40.0 | 40.0 | 40.0 | 20.0 |
| | R32 | mass% | 15.0 | 30.0 | 0.0 | 0.0 | 0.0 | 15.0 | 30.0 | 0.0 |
| GWP(AR4) | | - | 139 | 240 | 63 | 13 | 38 | 139 | 240 | 63 |
| COP Ratio (Relative to R1234yf) | | % | 106 | 107 | 107 | 107 | 107 | 107 | 108 | 108 |
| Refrigerating Capacity Ratio (To R1234yf) | | % | 63 | 65 | 60 | 56 | 58 | 61 | 62 | 59 |
| Occupational Exposure Limit (OEL) | | ppm | 689 | 879 | 587 | 534 | 571 | 739 | 951 | 605 |

| Item | | Unit | Point C | Point $D_{r=0}$ | Point $H_{r=0}$ | Point E | Point $E'_{r=0}$ | $D_{r=1}$ | $F_{r=1}$ |
|---|---|---|---|---|---|---|---|---|---|
| Compositional Ratio | E-HFO-1132 | mass% | 57.0 | 44.0 | 20.0 | 28.3 | 20.0 | 44.0 | 29.8 |
| | R152a | mass% | 43.0 | 0.0 | 0.0 | 71.7 | 28.3 | 0.0 | 0.0 |
| | R1234yf | mass% | 0.0 | 56.0 | 80.0 | 0.0 | 51.7 | 0.0 | 0.0 |
| | R1234ze | mass% | 0.0 | 0.0 | 0.0 | 0.0 | 0.0 | 56.0 | 70.2 |
| | R32 | mass% | 0.0 | 0.0 | 0.0 | 0.0 | 0.0 | 0.0 | 0.0 |
| GWP(AR4) | | - | 54 | 1 | 1 | 89 | 36 | 1 | 1 |
| COP Ratio (Relative to R1234yf) | | % | 105 | 102 | 104 | 108 | 106 | 105 | 107 |
| Refrigerating Capacity Ratio (To R1234yf) | | % | 74 | 72 | 57 | 58 | 57 | 63 | 54 |
| Occupational Exposure Limit (OEL) | | ppm | 482 | 400 | 442 | 650 | 536 | 457 | 515 |

The results shown in Table 5 indicate that the refrigerant of the present disclosure is suitable for replacement for R410A from the viewpoint of both the refrigerating capacity ratio (in particular, 54% or more achieved) and COP ratio (in particular, 102% or more achieved).

Table 6-1

| Item | | Unit | Ref. Ex. 3 | Example 1-20 | Example 1-21-1 | Example 1-21-2 | Example 1-21-3 | Example 1-22 | Example 2-20 | Example 2-21-1 |
|---|---|---|---|---|---|---|---|---|---|---|
| Compositional Ratio | E-HFO-1132 | mass% | R404A | 30.0 | 30.0 | 15.0 | 0.0 | 30.0 | 30.0 | 30.0 |
| | R152a | mass% | | 10.0 | 30.0 | 30.0 | 30.0 | 50.0 | 10.0 | 30.0 |
| | R1234yf | mass% | | 60.0 | 40.0 | 40.0 | 40.0 | 20.0 | 32.9 | 21.9 |
| | R1234ze | mass% | | 0.0 | 0.0 | 0.0 | 0.0 | 0.0 | 27.1 | 18.1 |
| | R32 | mass% | | 0.0 | 0.0 | 15.0 | 30.0 | 0.0 | 0.0 | 0.0 |
| GWP(AR4) | | - | 3922 | 13 | 38 | 139 | 240 | 63 | 13 | 38 |
| COP Ratio (Relative to R1234yf) | | % | 100 | 104 | 106 | 106 | 107 | 107 | 105 | 106 |
| Refrigerating Capacity Ratio (To R1234yf) | | % | 100 | 84 | 82 | 85 | 87 | 78 | 77 | 77 |
| Occupational Exposure Limit (OEL) | | ppm | 1000 | 451 | 511 | 653 | 828 | 573 | 485 | 536 |

Table 6-2

| Item | | Unit | Example 2-21-2 | Example 2-21-3 | Example 2-22 | Example 3-20 | Example 2-21-1 | Example 3-21-2 | Example 3-21-3 | Example 3-22 |
|---|---|---|---|---|---|---|---|---|---|---|
| Compositional Ratio | E-HFO-1132 | mass% | 15.0 | 0.0 | 30.0 | 30.0 | 30.0 | 15.0 | 0.0 | 30.0 |
| | R152a | mass% | 30.0 | 30.0 | 50.0 | 10.0 | 30.0 | 30.0 | 30.0 | 50.0 |
| | R1234yf | mass% | 21.9 | 21.9 | 11.0 | 0.0 | 0.0 | 0.0 | 0.0 | 0.0 |
| | R1234ze | mass% | 18.1 | 18.1 | 9.0 | 60.0 | 40.0 | 40.0 | 40.0 | 20.0 |
| | R32 | mass% | 15.0 | 30.0 | 0.0 | 0.0 | 0.0 | 15.0 | 30.0 | 0.0 |
| GWP(AR4) | | - | 139 | 240 | 63 | 13 | 38 | 139 | 240 | 63 |
| COP Ratio (Relative to R1234yf) | | % | 107 | 107 | 107 | 106 | 107 | 107 | 108 | 108 |
| Refrigerating Capacity Ratio (To R1234yf) | | % | 81 | 84 | 76 | 66 | 71 | 75 | 78 | 73 |
| Occupational Exposure Limit (OEL) | | ppm | 689 | 879 | 587 | 534 | 571 | 739 | 951 | 605 |

| Item | | Unit | Point C | Point D$_{ro}$ | Point H$_{ro}$ | Point E | Point E'$_{ro}$ | D$_{r1}$ | F$_{r1}$ |
|---|---|---|---|---|---|---|---|---|---|
| Compositional Ratio | E-HFO-1132 | mass% | 57.0 | 44.0 | 20.0 | 28.3 | 20.0 | 44.0 | 29.8 |
| | R152a | mass% | 43.0 | 0.0 | 0.0 | 71.7 | 28.3 | 0.0 | 0.0 |
| | R1234yf | mass% | 0.0 | 56.0 | 80.0 | 0.0 | 51.7 | 0.0 | 0.0 |
| | R1234ze | mass% | 0.0 | 0.0 | 0.0 | 0.0 | 0.0 | 56.0 | 70.2 |
| | R32 | mass% | 0.0 | 0.0 | 0.0 | 0.0 | 0.0 | 0.0 | 0.0 |
| GWP(AR4) | | - | 54 | 1 | 1 | 89 | 36 | 1 | 1 |
| COP Ratio (Relative to R1234yf) | | % | 105 | 103 | 103 | 108 | 106 | 105 | 106 |
| Refrigerating Capacity Ratio (To R1234yf) | | % | 98 | 100 | 73 | 72 | 73 | 78 | 63 |
| Occupational Exposure Limit (OEL) | | ppm | 482 | 400 | 442 | 650 | 536 | 457 | 515 |

The results shown in Table 6 indicate that the refrigerant of the present disclosure is suitable for replacement for R404A from the viewpoint of both the refrigerating capacity ratio (in particular, 63% or more achieved) and COP ratio (in particular, 103% or more achieved).

Additionally, the refrigerant of the present disclosure also exhibits similar COP ratios and refrigerating capacity ratios when HFO-1123 is used instead of HFO-1132(E).

## Claims

1. A composition comprising a refrigerant,
the refrigerant comprising trans-1,2-difluoroethylene (HFO-1132(E)), 1,1-difluoroethane (R152a), and X in a total amount of 99.5 mass% or more based on the entire refrigerant, wherein X represents 2,3,3,3-tetrafluoropropene (HFO-1234yf) and/or trans-1,3,3,3-tetrafluoropropene (HFO-1234ze(E)),

wherein in a ternary composition diagram in which

the percentages by mass of HFO-1132(E), R152a, and X (HFO-1234yf and/or HFO-1234ze(E)) based on their sum in the refrigerant are respectively x, y, and z,
the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and
the sum of HFO-1132(E), R152a, and X is 100 mass%, when $0 \leq r < 0.45125$, coordinates (x,y,z) fall within a figure surrounded by

point A (80.2, 19.8, 0.0),
point B$_r$ ($-10.832r^2+33.032r+44.3$, 0.0, $10.832r^2-33.032r+55.7$),
point H$_r$ (20.0, 0.0, 80.0),
point E'$_r$ (20.0, $-62.715r+28.3$, $62.715r+51.7$), and
point E (28.3, 71.7, 0.0),

or fall on any of line segments AB$_r$, H$_r$E'$_r$, or E'$_r$E but do not fall on point A, point B$_r$, point H$_r$, or point E, and line segment AB$_r$, line segment B$_r$H$_r$, line segment H$_r$E'$_r$, line segment E'$_r$E, and line segment EA are straight lines, and when $0.45125 \leq r \leq 1.0$, coordinates (x,y,z) fall within a figure surrounded by

point A (80.2, 19.8, 0.0),

point $B_r$ (-10.832$r^2$+33.032r+44.3, 0.0, 10.832$r^2$-33.032r+55.7),
point $F_r$ (5.892$r^2$+9.308r+14.6, 0.0, -5.892$r^2$-9.308r+85.4), and
point E (28.3, 71.7, 0.0),

or fall on line segment $AB_r$ or $F_rE$ but do not fall on point A, point $B_r$, point $F_r$, or point E, and
line segment $AB_r$, line segment $B_rF_r$, line segment $F_rE$, and line segment EA are straight lines.

2. The composition according to claim 1,
wherein

in a ternary composition diagram in which
the percentages by mass of HFO-1132(E), R152a, and X (HFO-1234yf and/or HFO-1234ze(E)) based on their sum in the refrigerant are respectively x, y, and z,
the ratio of the concentration of HFO-1234ze(E) to the concentration of (HFO-1234yf and HFO-1234ze(E)) is expressed by r = HFO-1234ze(E)/(HFO-1234yf + HFO-1234ze(E)), and
the sum of HFO-1132(E), R152a, and X is 100 mass%, when 0≤r<0.45125, coordinates (x,y,z) fall within a figure surrounded by

point C (57.0, 43.0, 0.0),
point $D_r$ (44.0, 0.0, 56.0),
point $H_r$ (20.0, 0.0, 80.0),
point $E'_r$ (20.0, -62.715r+28.3, 62.715r+51.7), and
point E (28.3, 71.7, 0.0),

or fall on any of line segment $CD_r$, $H_rE'_r$, or $E'_rE$ but do not fall on point C, point $D_r$, point $H_r$, or point E, and
line segment $CD_r$, line segment $D_rH_r$, line segment $H_rE'_r$, line segment $E'_rE$, and line segment EA are straight lines, and when 0.45125≤r≤1.0, coordinates (x,y,z) fall within a figure surrounded by

point C (57.0, 43.0, 0.0),
point $D_r$ (44.0, 0.0, 56.0),
point $F_r$ (5.892$r^2$+9.308r+14.6, 0.0, -5.892$r^2$-9.308r+85.4), and
point E (28.3, 71.7, 0.0),

or fall on any of line segment $CD_r$, $D_rF_r$, or $F_rE$ but do not fall on point C, point $D_r$, point $F_r$, or point E, and
line segment $CD_r$, line segment $D_rF_r$, line segment $F_rE$, and line segment EC are straight lines.

3. The composition according to claim 1 or 2, wherein the refrigerant further comprises difluoromethane (R32).

4. A refrigeration method comprising operating a refrigeration cycle using the composition of any one of claims 1 to 3.

5. A refrigeration apparatus comprising the composition of any one of claims 1 to 3 as a working fluid.

6. The composition according to any one of claims 1 to 3, which is for use in operating an air-conditioning system for a vehicle

7. A refrigeration apparatus comprising the composition of any one of claims 1 to 3 as a working fluid, wherein the refrigeration apparatus is an air conditioner for a gasoline vehicle, a hybrid vehicle, an electric vehicle, or a hydrogen vehicle.

8. The composition according to any one of claims 1 to 3, which is for use as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, or R1234ze(E).

Fig. 1

Fig. 2

Fig. 3

## INTERNATIONAL SEARCH REPORT

| International application No. |
|---|
| **PCT/JP2024/003884** |

### A. CLASSIFICATION OF SUBJECT MATTER

***C09K 5/04*** (2006.01)i
FI: C09K5/04 F; C09K5/04 E

According to International Patent Classification (IPC) or to both national classification and IPC

### B. FIELDS SEARCHED

Minimum documentation searched (classification system followed by classification symbols)

C09K5/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| Y | WO 2022/075389 A1 (DAIKIN INDUSTRIES, LTD.) 14 April 2022 (2022-04-14) claims, paragraphs [0065]-[0187], [0225]-[0247], etc. | 1-8 |
| Y | MCLINDEN, M. O. et al., Limited options for low-global-warming-potential refrigerants, Nature Communications, (2017), vol. 8, pp. 14476(1-9), DOI 10.1038/ncomms14476 table 1, fig. 2-4, etc. | 1-8 |
| P, X | WO 2023/182443 A1 (MITSUBISHI ELECTRIC CORPORATION) 28 September 2023 (2023-09-28) claims, paragraphs [0089]-[0094], [0103], etc. | 1-8 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/003884**

| Patent document cited in search report | Publication date (day/month/year) | Patent family member(s) | Publication date (day/month/year) |
|---|---|---|---|
| WO 2022/075389 A1 | 14 April 2022 | US 2023/0242801 A1 claims, paragraphs [0088]-[0220], [0342]-[0371], etc. EP 4227390 A1 CN 116568774 A | |
| WO 2023/182443 A1 | 28 September 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015141678 A